# EUROPÄISCHE PATENTSCHRIFT

(11) **EP 2 751 888 B1**
(45) Veröffentlichungstag und Bekanntmachung des Hinweises auf die Patenterteilung: **14.10.2015**
(21) Anmeldenummer: 12769880.1
(22) Anmeldetag: 18.08.2012
(51) Int. Cl.: H02B 1/21

(54) **SAMMELSCHIENENKONTAKTIERUNG MIT SCHIENENDICKENAUSGLEICH**
BUSBAR CONTACT-MAKING MEANS WITH BAR THICKNESS COMPENSATION
MISE EN CONTACT DE BARRES OMNIBUS À COMPENSATION DE L'ÉPAISSEUR DES BARRES

(30) Priorität: 29.08.2011 DE 102011053082
(43) Veröffentlichungstag der Anmeldung: 09.07.2014
(73) Patentinhaber: RITTAL GmbH & Co. KG, 35745 Herborn (DE)
(72) Erfinder: KAYMA, Jörg, 35745 Herborn (DE); PLATH, Pierre, 35753 Greifenstein (DE); KÜSTER, Frank, 35767 Breitscheid (DE); KIENHOLZ, Matthias, 35444 Biebertal (DE)
(74) Vertreter: Angerhausen, Christoph
(86) Internationale Anmeldenummer: PCT/DE2012/000843
(87) Internationale Veröffentlichungsnummer: WO 2013/029588

(56) Entgegenhaltungen:
- WO-A1-2008/037229
- AT-A4- 506 801
- DE-C1- 10 061 942
- DE-C1- 19 836 383
- DE-U1- 29 806 302

## Beschreibung

Die Erfindung betrifft eine Sammelschienenkontaktierung mit Schienendickenausgleich zur mechanischen Befestigung und elektrischen Kontaktierung eines elektrischen Gerätes in Kombination mit einer Stromschiene einer ersten Dicke oder einer Stromschiene einer zweiten Dicke, die kleiner als die erste Dicke ist, auf der die Sammelschienenkontaktierung arretierbar ist, mit einem Grundkörper, welcher eine Basis mit einer Öffnung und ein davon beabstandetes, im wesentlichen parallel zu der Basis angeordnetes Gegenstück umfasst, wobei der Abstand für eine Stromschiene der ersten Dicke passend ist, einem Kontaktelement, das zumindest teilweise in der Öffnung der Basis sitzt und in Richtung auf das Gegenstück kraftbeaufschlagt ist, und einem Distanzstück, das aus einer Anfangsposition verschwenkbar am Gegenstück des Grundkörpers aufgehängt ist, wobei die Schwenkachse der Öffnung der Basis gegenübersteht, und das einen ersten Exzenterhebel und einen von diesem beabstandeten zweiten Exzenterhebel aufweist. Eine derartige Sammelkontaktierung ist aus der WO 2008/037229 A1 bekannt.

"Passend" für eine Stromschiene einer bestimmten Dicke bedeutet, dass diese bei mechanisch kraftbeaufschlagtem Kontaktelement kraftschlüssig zwischen Basis und Gegenstück sitzt, wobei Toleranzen zugelassen sind, die gegebenenfalls durch das Kontaktelement ausgeglichen werden.

In Sammelschienensystemen werden Stromschienen unterschiedlicher Dicke verwendet, wobei 5 mm und 10 mm gängige Werte sind. Während der Lebensdauer eines elektrischen Gerätes tritt nicht selten der Fall auf, dass es zunächst mit einer Stromschiene der geringeren Dicke, in einer späteren Verwendung mit der einer größeren Dicke verbunden werden soll. Es ist daher zweckmäßig, Maßnahmen vorzusehen, mittels derer die lichte Weite im Grundkörper, also im Wesentlichen der Abstand der aufeinander zuweisenden Flächen von Basis und Gegenstück, veränderbar ist. Dabei soll bei minimaler Bauteilbeanspruchung bei der Montage und Wiederverwendbarkeit und Unverlierbarkeit einzelner Bauelemente in einfacher Weise eine flexible Anpassung der Aufhängung des Gerätes an unterschiedliche Stromschienendicken ermöglicht werden.

Eine Sammelschienenkontaktierung, die dieses leistet, ist in der WO 2008/037229 A1 beschrieben. Die Sammelschienenkontaktierung muss dabei vom Montagepersonal für die jeweilige Dicke der Stromschiene durch Einstellen eines Distanzstückes vorbereitet werden. Wenn das Distanzstück vollständig in das Gegenstück eingeschwenkt und dort verrastet ist, ist die Sammelschienenkontaktierung für das Aufsetzen auf eine Stromschiene größerer Dicke vorbereitet. Die Sammelschienenkontaktierung kann dann auf eine entsprechende Stromschiene aufgeschoben werden, wobei ein druckfederkraftbeaufschlagtes Kontaktelement an den Seitenflächen der Stromschiene entlang gleitet. Zum Aufsetzen der Sammelschienenkontaktierung auf eine Stromschiene geringerer Dicke wird das Distanzstück so voreingestellt und verrastet werden, dass ein erster Exzenterhebel in den Bereich zwischen Basis und Gegenstück ragt, an den sich beim Aufsetzen der Sammelschienenkontaktierung die Stromschiene mit geringerer Dicke anlegt. Beim weiteren Aufschieben auf die Stromschiene drückt unter Überwindung der Einrastkraft diese mit ihrer Oberseite gegen den ersten Exzenterhebel und bewirkt damit eine Drehung des Distanzstückes, die durch einen zweiten Exzenterhebel begrenzt wird. Durch die drehbare Lagerung ergibt sich beim Aufschieben der Sammelschienenkontaktierung auf die Stromschiene keine Reibkraft zwischen Distanzstück und Stromschiene. Die einzige Reibkraft, die hier auftritt, ist die zwischen dem druckfederbelasteten Kontaktelement und Stromschiene, wobei durch eine Anlaufschräge am Kontaktelement für eine sanfte Aufsetzbewegung der Sammelschienenkontaktierung gesorgt ist.

Die bekannte Sammelschienenkontaktierung führt zu einer wesentlichen Entlastung des Montagepersonals beim Aufhängen elektrischer Geräte auf Stromschienen sowie zu einem geringeren Verschleiß der an der Stromschiene anliegenden Bauteile. Nachteilig ist allerdings, dass das Montagepersonal Vorarbeiten durchführen muss, um das Distanzstück in die jeweilige richtige Position für die Stromschiene zu bringen. Dies erfordert bei engen baulichen Gegebenheiten einiges Geschick. Außerdem müssen Einrastkräfte überwunden werden.

Es ist die Aufgabe der Erfindung, eine Sammelschienenkontaktierung der eingangs genannten Gattung weiter zu verbessern, so dass sie nahezu kräftefrei und vorzugsweise ohne werkzeugliche Vorbereitung auf Stromschienen unterschiedlicher Dicke aufgesetzt werden kann.

Diese Aufgabe wird durch eine Sammelschienenkontaktierung nach Anspruch 1 gelöst. Vorteilhafte Ausgestaltungen sind Gegenstand der Unteransprüche.

Erfindungsgemäß ist bei einer Sammelschienenkontaktierung der eingangs genannten Gattung vorgesehen, dass das Distanzstück die Anfangsposition federkraftbeaufschlagt in einem durch eine Stromschiene unbelasteten Zustand einnimmt, wobei in der Anfangsposition sowohl der erste Exzenterhebel als auch der zweite Exzenterhebel in den Spalt zwischen Basis und Gegenstück ragt und die freie Hebelkante des ersten Exzenterhebels den Spalt zwischen Basis und Gegenstück derart verengt, dass die lichte Weite des Spaltes kleiner als die erste Dicke, jedoch größer als die zweite Dicke ist, und die freie Hebelkante des zweiten Exzenterhebels den Spalt zwischen Basis und Gegenstück derart verengt, dass die lichte Weite des Spaltes kleiner als die zweite Dicke ist. Der erste Exzenterhebel liegt dabei in Aufschubrichtung vor dem zweiten Exzenterhebel, d.h. beim Aufsetzen auf eine Stromschiene trifft diese zunächst auf den ersten Exzenterhebel bzw. passiert ihn.

Soll nun auf eine Stromschiene der ersten Dicke aufgeschoben werden, so kommt diese in Kontakt mit der freien Hebelkante des ersten Exzenterhebels und verschwenkt das Distanzstück aus dem Weg der Stromschiene, bis es beispielsweise vollständig in dem Gegenstück aufgenommen ist und dort eine spezifische Winkel-Endstellung einnimmt. Eine Stromschiene der zweiten Dicke gleitet unter der freien Hebelkante des ersten Exzenterhebels vorbei in den Spalt zwischen Basis und Gegenstück und trifft auf die freie Hebelkante des zweiten Exzenterhebels, so dass bei der weiteren Aufsetzbewegung der Sammelschienenkontaktierung das Distanzstück wiederum verschwenkt wird, bis es eine Winkel-Endstellung einnimmt, die im Folgenden als erste Winkel-Endstellung bezeichnet wird.

Durch die erfindungsgemäß Anordnung von erstem Exzenterhebel und zweiten Exzenterhebel bzw. ihrer ausgewählten Dimensionierung müssen keinerlei Einrastkräfte überwunden werden, und es ist eine werkzeugliche Vorbereitung der Sammelschienenkontaktierung nicht mehr erforderlich. Anders als im Stand der Technik ist das Distanzstück vor dem Aufschieben auf eine Stromschiene immer in ein und derselben Anfangsposition, und es erfolgt keinerlei Voreinstellung oder Änderungseinstellung des Distanzstückes, wenn eine Stromschiene mit geänderter Dicke zum Einsatz kommt. Die Anpassung erfolgt sozusagen automatisch.

Nach einer vorteilhaften Ausgestaltung der Erfindung weist der erste Exzenterhebel angrenzend an seine freie Hebelkante eine konkav verlaufende Endfläche auf, wobei in der ersten oben angesprochenen Winkel-Endposition die durch die freie Hebelkante verlaufende Tangentialebene zur Endfläche parallel zu der zum Spalt weisenden Oberfläche der Basis liegt. Bei geeigneter Dimensionierung wird somit dieser Bereich des Distanzstückes auf der Stromschiene der zweiten Dicke liegen, wenn die Sammelschienenkontaktierung vollständig auf die Stromschiene aufgeschoben ist.

Nach einer weiteren Ausgestaltung ist das Kontaktelement im Längsschnitt U- oder V-förmig, wobei im Bereich der Umlenkung eine Anlaufschräge gebildet ist, die in der Öffnung der Basis liegt. Durch die gewählte Schleifenform für das Kontaktelement wird nicht nur die Anlaufschräge geformt, sondern auch die Federkraft unterstützt, da sich die U- oder V-förmige Schleife, wenn sie Strom führt, aufgrund der wirkenden Lorentzkraft auseinanderdrückt. Vorteilhaft besteht das Kontaktelement aus Kupfer mit Federstahl. Dabei unterstützt der Federstahl die Kraftwirkung des Kontaktelements.

Weiter vorteilhaft ist, wenn bei Sammelschienenkontaktierung das Kontaktelement im Längsschnitt U- oder V-förmig ist, wobei im Bereich der Umlenkung eine Anlaufschräge gebildet ist, die in der Öffnung der Basis liegt. Dann kann nämlich die mechanische Vorbelastung des Kontaktelementes verringert werden, was auch die auf die Stromschiene wirkende Reibung reduziert.

Bevorzugt ist das streifenförmige Material derart geformt, dass es im Bereich der Umlenkung von einem gerade verlaufenden Teil in die Anlaufschräge und dann in eine Anlagefläche übergeht, so dass bei Strombeaufschlagung des Kontaktelementes der Strom in der Anlagefläche in eine erste Richtung und in dem gerade verlaufenden Teil in eine zu dieser entgegengesetzte Richtung fließt.

Im Folgenden soll die Erfindung lediglich beispielhaft anhand der beigefügten Zeichnung näher erläutert werden. Es zeigt:
- Figur 1: eine schematische Explosionsdarstellung der Komponenten einer Sammelschienenkontaktierung gemäß der vorliegenden Erfindung;
- Figur 2: eine Seitenansicht des Grundkörpers mit eingesetztem Kontaktelement;
- Figur 3: eine Seitenansicht des Grundkörpers mit Kontaktelement und montiertem Distanzstück;
- Figur 4: eine auf eine Stromschiene geringerer Dicke aufgeschobene Sammelschienenkontaktierung;
- Figur 5: eine auf eine Stromschiene größerer Dicke aufgeschobene Sammelschienenkontaktierung; und
- Figur 6: ein Ausführungsbeispiel eines Kontaktelementes zur Verwendung bei der Sammelschienenkontaktierung der vorliegenden Erfindung.

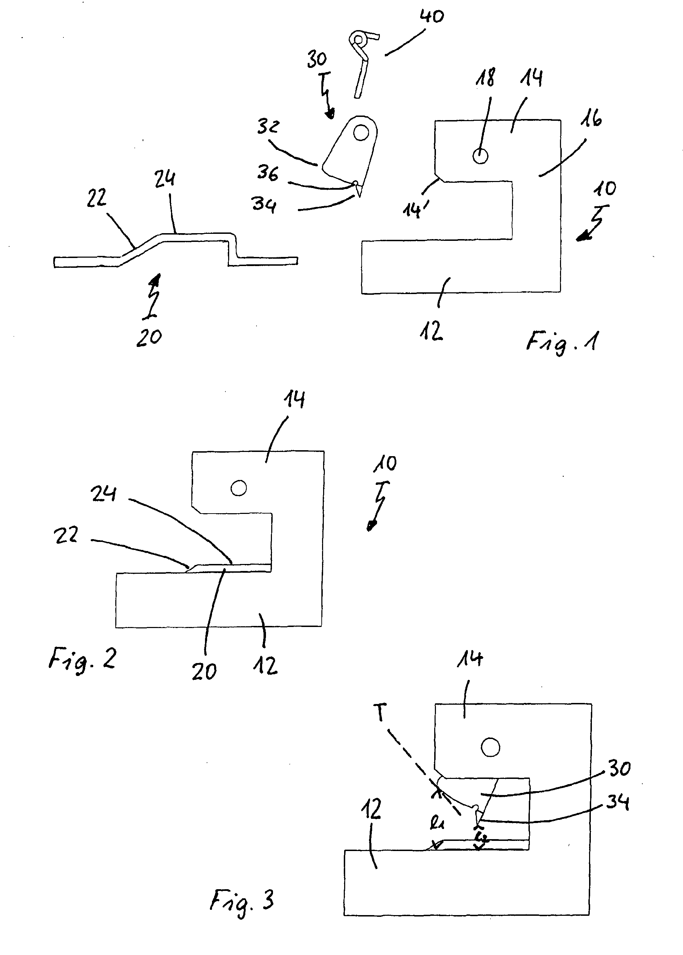

Figur 1 zeigt eine schematische Explosionsdarstellung einer Sammelschienenkontaktierung gemäß einer Ausführungsform der vorliegenden Erfindung. Die Sammelschienenkontaktierung umfasst einen Grundkörper 10, der eine Basis 12 und ein davon beabstandetes, im Wesentlichen parallel verlaufendes Gegenstück 14 aufweist, wobei Basis 12 und Gegenstück 14 durch eine Wand 16 verbunden sind. Die Länge des Gegenstücks 14 in Aufschubrichtung ist geringer als die Länge der Basis 12, so dass der Grundkörper 10 insgesamt etwa die Form eines Hakens hat, der auf eine Stromschiene aufzusetzen ist. Dabei dient eine innenliegende, abgeschrägte Kante 14' am Gegenstück 14 als Aufsetzhilfe. Die Sammelschienenkontaktierung umfasst weiterhin ein Kontaktelement 20, das zweckmäßigerweise aus streifenartigem Material gebildet und auf später noch zu beschreibende Weise in die Basis 12 des Grundkörpers 10 eingesetzt ist. Das Kontaktelement 20 weist eine Anlaufschräge 22 und eine daran anschließende Anlagefläche 24 auf. Eine weitere Komponente ist ein Distanzstück 30, das durch eine Feder 40 vorbelastet, am Gegenstück 14 aufgehängt ist, wobei es um eine Schwenkachse 18 verschwenkbar ist. Das Distanzstück 30 weist einen ersten Exzenterhebel 32 und einen zweiten Exzenterhebel 34 auf, wobei eine Ausnehmung 36 eine Materialverjüngung am Fuß des zweiten Exzenterhebels 34 bildet, so dass dieser begrenzt nachgiebig angelenkt ist.

Figur 2 zeigt eine Seitenansicht des Grundkörpers 10 mit in die Basis 12 eingesetztem Kontaktelement 20. In der Basis 12 ist eine in der Zeichnungsfigur nicht sichtbare Öffnung vorgesehen, durch die ein Teil der Anlaufschräge 22 und ein Teil der Anlagefläche 24 in den Spalt zwischen Basis 12 und Gegenstück 14 des Grundkörpers 10 ragen. Das Kontaktelement 20 ist in Richtung auf das Gegenstück 14 kraftbeaufschlagt.

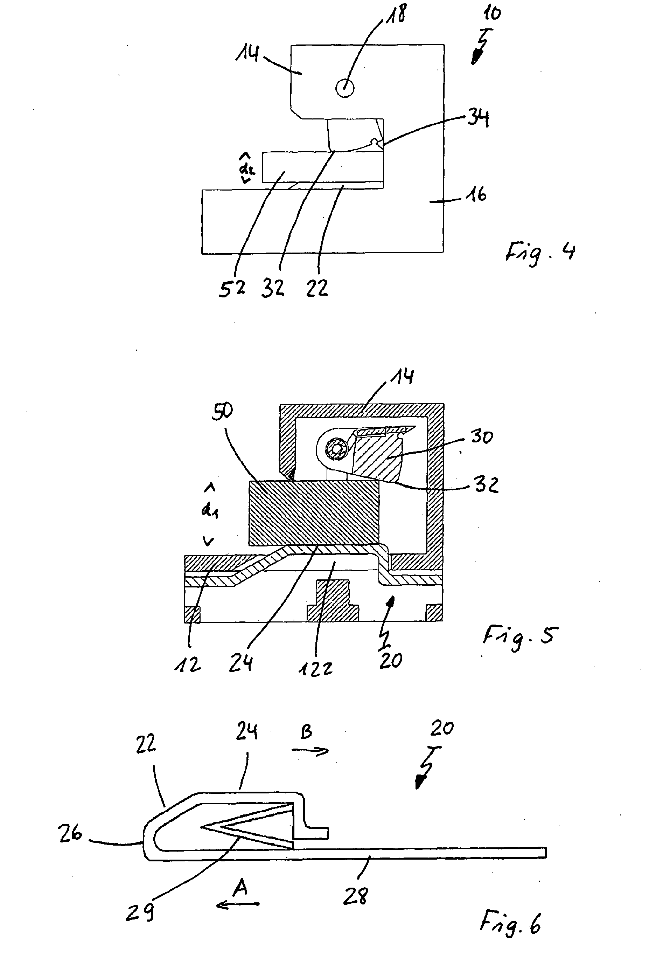

Figur 3 stellt dar, wie in den mit dem Kontaktelement 20 bestückten Grundkörper 10 das Distanzstück 30 eingehängt ist. Durch die Vorbelastung der Feder (in der Figur 4 nicht zu sehen) nimmt das Distanzstück 30 in einem durch eine Stromschiene unbelasteten Zustand immer die in der Figur 3 veranschaulichte Anfangsposition ein, bei der ein erster Exzenterhebel 32 des Distanzstückes 30 und ein zweiter der vorliegenden Erfindung 34 des Distanzstückes 30 in den Spalt zwischen Basis 12 und Gegenstück 14 des Grundkörpers 10 ragen. Die Abmessungen des Distanzstücks 30 sind so gewählt, dass die freie Hebelkante des ersten Exzenterhebels 32 den Spalt zwischen Basis 12 und Gegenstück 14 derart verengt, dass die lichte Höhe l₁ des Spaltes kleiner als die größere, erste Dicke einer Stromschiene, jedoch größer als die kleinere, zweite Dicke einer Stromschiene ist. Die freie Hebelkante des zweiten Exzenterhebels 34 verengt den Spalt zwischen Basis 12 und Gegenstück 14 derart, dass die lichte Höhe l₂ des Spaltes kleiner als die zweite Dicke ist. Der erste Exzenterhebel 32 weist angrenzend an seine freie Hebelkante eine konkav verlaufende Endfläche auf, wobei in einer ersten Winkel-Endposition, die im Zusammenhang mit Figur 4 näher beschrieben wird, die durch die freie Hebelkante verlaufende Tangentialebene T zur Endfläche parallel zu der zum Spalt weisenden Oberfläche der Basis 2 liegt.

Figur 4 zeigt die Situation, in der die Sammelschienenkontaktierung auf eine Stromschiene 52 der Dicke d₂ geschoben ist. Da die Dicke d₂ der Stromschiene 52 geringer ist als die lichte Weite l₁ zwischen der freien Kante des ersten Exzenterhebels 32 des Distanzstückes 30 und der Basis 12 des Grundkörpers 10 in der Anfangsposition (Figur 3), läuft die Stromschiene 52 unter dieser freien Hebelkante vorbei und trifft auf den zweiten Exzenterhebel 34, den die Stromschiene 52 bei der weiteren Aufschiebebewegung des Grundkörpers 10 mitnimmt, so dass sich das Distanzstück 30 um die Achse 18 dreht, bis es die in Figur 4 gezeigte erste Winkel-Endposition einnimmt, bei der die Stromschiene 52 an der Wand 16 anliegt. Bei an die Dicke d₂ der Stromschiene 52 angepasster Dimensionierung des Distanzstücks 30 drückt nun das Distanzstück 30 auf die Stromschiene 52.

Figur 5 zeigt eine Schnittansicht durch einen Sammelschienenkontaktierung, die auf eine Stromschiene 50 einer ersten Dicke d₁ geschoben ist. Da die Dicke d₁ der Stromschiene 50 größer ist als die lichte Weite l₁ zwischen der freien Hebelkante des ersten Exzenterhebels 32 des Distanzstücks 30 in seiner Anfangsposition (Figur 3), wird das Distanzstück 30 von der Stromschiene 50 mitgenommen, da sie am ersten Exzenterhebel 32 beim Aufschieben zur Anlage kommt. Das Distanzstück 30 wird bei der weiteren Aufschiebebewegung weiter verschwenkt, bis es eine zweite Winkel-Endposition erreicht, in der das Distanzstück 30 vollständig im Inneren des Gegenstücks 14 aufgenommen ist. Dabei liegt die Stromschiene 50 dann im Kontakt mit der Anlagefläche 24 des Kontaktelementes 20, die, wie in dieser Ansicht deutlich zu erkennen ist, durch eine Öffnung 122 in der Basis 12 ragt.

Figur 6 zeigt ein Kontaktelement 20, das besonders vorteilhaft bei einer Sammelschienerikontaktierung gemäß der vorliegenden Erfindung eingesetzt werden kann. Das Kontaktelement 20 besteht aus einem streifenförmigen Material, bevorzugt Federstahl, wobei das streifenförmige Material derart verformt ist, dass es im Bereich einer Umlenkung 26 in eine die Anlaufschräge 22 und dann in eine Anlagefläche 24 übergeht. Bei Strombeaufschlagung fließt der Strom im gerade verlaufenden Teil 28 des Kontaktelementes 20 beispielsweise in die Richtung des Pfeiles A, in der Anlagefläche 24 hingegen in die entgegengesetzte Richtung, d. h. in Richtung des Pfeiles B. Damit kann im Bereich der Anlagefläche 24 eine durch die Ströme unterschiedlicher Richtung erzeugte Lorentzkraft wirken, die den Federarm des Kontaktelementes 20, der die Anlagefläche 24 enthält, von dem gerade verlaufenden Teil 28 abstößt. Damit wird die Federkraft des Kontaktelementes 20 gegenüber dem stromlosen Zustand, in Richtung auf die Stromschiene wirkend, vergrößert, so dass, wenn die Sammelschienenkontaktierung auf eine Stromschiene, z. B. 50 oder 52, gesetzt ist, die Anpresskraft bei Stromführung entsprechend erhöht wird. Zwischen die Anlagefläche 24 und den gerade verlaufenden Teil 28 kann ein zusätzliches Federelement 29 gebracht werden, das ebenfalls für eine Vergrößerung der Anpresskraft sorgt.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. Sammelschienenkontaktierung mit Schienendickenausgleich zur mechanischen Befestigung und elektrischen Kontaktierung eines elektrischen Gerätes in Kombination mit einer Stromschiene einer ersten Dicke oder einer Stromschiene einer zweiten Dicke, die kleiner als die erste Dicke ist, auf der die Sammelschienenkontaktierung arretierbar ist, mit
- einem Grundkörper (10), welcher eine Basis (12) mit einer Öffnung (122) und ein davon beabstandetes, im wesentlichen parallel zu der Basis (12) angeordnetes Gegenstück (14) umfasst, wobei der Abstand für eine Stromschiene der ersten Dicke passend ist;
- einem Kontaktelement (20), das zumindest teilweise in der Öffnung (122) der Basis (12) sitzt und in Richtung auf das Gegenstück (14) kraftbeaufschlagt ist;
- einem Distanzstück (30), das aus einer Anfangsposition verschwenkbar am Gegenstück (14) des Grundkörpers (10) aufgehängt ist, wobei die Schwenkachse (18) der Öffnung (122) der Basis (12) gegenübersteht, und das einen ersten Exzenterhebel (32) und einen von diesem beabstandeten zweiten Exzenterhebel (34) aufweist;
**dadurch gekennzeichnet, dass**
das Distanzstück (30) die Anfangsposition federkraftbeaufschlagt in einem durch eine Stromschiene unbelasteten Zustand einnimmt, wobei in der Anfangsposition sowohl der erste Exzenterhebel (32) als auch der zweite Exzenterhebel (34) in den Spalt zwischen Basis (12) und Gegenstück (14) ragt und die freie Hebelkante des ersten Exzenterhebels (32) den Spalt zwischen Basis (12) und Gegenstück (14) derart verengt, dass die lichte Weite (l₁) des Spaltes kleiner als die erste Dicke (d₁), jedoch größer als die zweite Dicke (d₂) ist, und die freie Hebelkante des zweiten Exzenterhebels (34) den Spalt zwischen Basis (12) und Gegenstück (14) derart verengt, dass die lichte Weite (l₂) des Spaltes kleiner als die zweite Dicke (d₂) ist, wobei der erste Exzenterhebel (32) in Aufschubrichtung auf eine Stromschiene vor dem zweiten Exzenterhebel (34) positioniert ist.

2. Sammelschienenkontaktierung nach Anspruch 1, **dadurch gekennzeichnet, dass** der erste Exzenterhebel (32) angrenzend an seine freie Hebelkante eine konkav verlaufende Endfläche aufweist, wobei in einer ersten Winkel-Endposition die durch die freie Hebelkante verlaufende Tangentialebene zur Endfläche parallel zu der zum Spalt weisenden Oberfläche der Basis (12) liegt.

3. Sammelschienenkontaktierung nach Anspruch 1, **dadurch gekennzeichnet, dass** das Kontaktelement (20) im Längsschnitt U- oder V-förmig ist, wobei im Bereich der Umlenkung eine Anlaufschräge (22) gebildet ist, die in der Öffnung (122) der Basis (12) liegt.

4. Sammelschienenkontaktierung nach einem der Ansprüche 1 bis 3, **dadurch gekennzeichnet, dass** das Kontaktelement (20) aus Kupfer mit Federstahl besteht.

5. Sammelschienenkontaktierung nach Anspruch 3, **dadurch gekennzeichnet, dass** das streifenförmige Material derart geformt ist, dass es im Bereich der Umlenkung (26) von einem gerade verlaufenden Teil (28) in die Anlaufschräge (22) und dann in eine Anlagefläche (24) übergeht, so dass bei Strombeaufschlagung des Kontaktelementes (20) der Strom in der Anlagefläche (24) in eine erste Richtung und in dem gerade verlaufenden Teil (28) in eine zu dieser entgegengesetzte Richtung fließt.

## Claims

1. Busbar contact-making means with bar thickness compensation for mechanical attachment and electrical contacting of an electrical apparatus in combination with a busbar having a first thickness or a busbar having a second thickness which is smaller than the first thickness, on which busbar the busbar contact-making means can be locked, with
- a base body (10) which comprises a base (12) with an opening (122) and, at a distance therefrom, arranged substantially parallel to the base (12), a counterpiece (14), wherein the separation distance is suitable for a busbar having the first thickness;
- a contact element (20) which sits at least partially in the opening (122) of the base (12) and which is exposed to force in the direction onto the counterpiece (14);
- a spacer part (30) which is suspended in a manner so it can be swiveled from a starting position on the counterpiece (14) of the base body (10), wherein the swivel axis (18) of the opening (122) faces the base (12) and which comprises a first eccentric lever (32) and a second eccentric lever (34) at a distance from said first eccentric lever;
**characterized in that**
the spacer (30) assumes the initial position under spring load in a state that is not loaded by a busbar, wherein, in the initial position, both the first eccentric lever (32) and also the second eccentric lever (34) protrude into the gap between the base (12) and the counterpiece (14), and the free lever edge of the first eccentric lever (32) narrows the gap between base (12) and counterpiece (14) in such a manner that the clear width (l₁) of the gap is smaller than the first thickness (d₁) but larger than the second thickness (d₂), and the free lever edge of the second eccentric lever (34) narrows the gap between base (12) and counterpiece (14) in such a manner that the clear width (l₂) of the gap is smaller than the second thickness (d₂), wherein the first eccentric lever (32) is positioned in the slide-on direction onto a busbar in front of the second eccentric lever (34).

2. Busbar contact-making means according to Claim 1, **characterized in that** the first eccentric lever (32) comprises a concavely extending end surface abutting against its free lever edge, wherein, in a first angular end position, the tangential plane extending through the free lever edge is lies parallel to the end surface of the surface of the base (12) facing the gap.

3. Busbar contact-making means according to Claim 1, **characterized in that** the contact element (20) is U or V shaped in longitudinal section, wherein, in the area of the deflection, a run-up bevel (22) is formed, which is located in the opening (122) of the base (12).

4. Busbar contact-making means according to any one of Claims 1 to 3, **characterized in that** the contact element (20) is made of copper with spring steel.

5. Busbar contact-making means according to Claim 3, **characterized in that** the strip-like material is shaped so that it transitions, in the area of the deflection (26), from a straight portion (28) into the run-up bevel (22) and then into a contact surface (24), so that, when voltage is applied to the contact element (20), the current flows in the contact surface (24) in a first direction and in the straight portion (28) in a direction opposite said first direction.

## Revendications

1. Dispositif de contact de rail collecteur avec compensation de l'épaisseur de la barre pour la fixation mécanique et la mise en contact électrique d'un appareil électrique en combinaison avec un rail conducteur présentant une première épaisseur et un rail conducteur présentant une deuxième épaisseur qui est inférieure à la première épaisseur, sur lequel le dispositif de contact du rail collecteur peut être bloqué, avec :
- un corps de base (10) qui comprend une base (12) avec une ouverture (122) et une pièce complémentaire (14) distante de celles-ci, disposée de manière globalement parallèle à la base (12), la distance étant adaptée à un rail conducteur de première épaisseur ;
- un élément de contact (20) qui se trouve au moins partiellement dans l'ouverture (122) de la base (12) et est soumis à une force en direction de la pièce complémentaire (14) ;
- une entretoise (30) qui est suspendue à la pièce complémentaire (14) du corps de base (10) à partir d'une position initiale, l'axe de pivotement (18) de l'ouverture (122) étant en face de la base (12) et qui comprend un premier levier excentrique (32) et un deuxième levier excentrique (34) espacé de celui-ci ;
**caractérisé en ce que**
l'entretoise (30) adopte la position initiale avec l'application d'une force dans un état non sollicité par un rail conducteur, le premier levier excentrique (32) ainsi que le deuxième levier excentrique (34) dépassant, dans la position initiale, dans l'interstice entre la base (12) et la pièce complémentaire (14) et le bord libre du premier levier excentrique (32) rétrécit l'interstice entre la base (12) et la pièce complémentaire (14) de façon à ce que la largeur interne (l₁) de l'interstice soit inférieure à la première épaisseur (d₁) mais supérieure à la deuxième épaisseur (d₂) et le bord libre du deuxième levier excentrique (34) rétrécit l'interstice entre la base (12) et la pièce complémentaire (14) de façon à ce que la largeur interne (l₂) de l'interstice soit inférieure à la deuxième épaisseur (d₂), le premier levier excentrique (32) étant positionné devant le deuxième levier excentrique (34) dans la direction de poussée sur un rail conducteur.

2. Dispositif de contact de rail collecteur selon la revendication 1, **caractérisé en ce que** le premier levier excentrique (32) comprend une surface d'extrémité concave adjacente à son bord libre, le plan tangentiel traversant le bord libre du levier en direction de la surface d'extrémité étant parallèle, dans une première position angulaire, à la surface, orientée vers l'interstice, de la base (12).

3. Dispositif de contact de rail collecteur selon la revendication 1, **caractérisé en ce que** l'élément de contact (20) présente une section longitudinale en forme de U ou de V, un chanfrein de départ (22), qui se trouve dans l'ouverture (122) de la base (12), étant formé au niveau du retour.

4. Dispositif de contact de rail collecteur selon l'une des revendications 1 à 3, **caractérisé en ce que** l'élément de contact (20) est constitué de cuivre avec de l'acier ressort.

5. Dispositif de contact de rail collecteur selon la revendication 3, **caractérisé en ce que** le matériau en forme de bande est formé de façon qu'il se transforme, au niveau du retour (26), d'une pièce droite (28) en chanfrein de départ (22) puis en une surface d'appui (24) de façon à ce que, lors de l'application d'un courant à l'élément de contact (20), le courant s'écoule dans la surface d'appui (24) dans une première direction et dans la pièce droite (28) dans une direction opposée.
